# EUROPÄISCHE PATENTSCHRIFT

(11) **EP 1 968 521 B1**
(45) Veröffentlichungstag und Bekanntmachung des Hinweises auf die Patenterteilung: **17.06.2015**
(21) Anmeldenummer: 07703664.8
(22) Anmeldetag: 05.01.2007
(51) Int. Cl.: A61H 33/00

(54) **VERFAHREN ZUR AUFBEREITUNG VON SALZWASSER UND SALZWASSER-ANLAGE**
METHOD FOR SALT WATER TREATMENT AND SALT WATER TREATMENT FACILITY
PROCEDE DE TRAITEMENT D'EAU SALEE ET INSTALLATION D'EAU SALEE

(30) Priorität: 05.01.2006 AT 182006
(43) Veröffentlichungstag der Anmeldung: 17.09.2008
(73) Patentinhaber: Wesner, Wolfgang, 1050 Wien (AT); Weissenbacher, Maximilian, 8644 Mürzhofen (AT); Deisl, Harald, 5411 Oberalm (AT)
(72) Erfinder: Wesner, Wolfgang, 1050 Wien (AT); Weissenbacher, Maximilian, 8644 Mürzhofen (AT); Deisl, Harald, 5411 Oberalm (AT)
(74) Vertreter: Vinazzer, Edith
(86) Internationale Anmeldenummer: PCT/EP2007/050106
(87) Internationale Veröffentlichungsnummer: WO 2007/077251

(56) Entgegenhaltungen:
- EP-A1- 0 328 474
- EP-A1- 1 211 225
- EP-A2- 0 444 585
- DE-A1- 10 063 808
- DE-A1- 19 603 690
- DE-U1-202005 001 021
- US-A- 4 988 436
- US-A- 5 667 671

## Beschreibung

*Die Erfindung betrifft ein Verfahren zur Aufbereitung von Salzwasser aus Bade-oder Schwimmbecken mit einem Salzgehalt von 1g*/*l bis 60g*/*l durch Zirkulation in einem geschlossenen Kreislauf, welcher eine Umwälzeinrichtung aufweist, wobei das Salzwasser einen Filterkörpers durchströmt. Die Erfindung betrifft ferner eine Salzwasser-Anlage bestehend aus einem Bade-oder Schwimmbecken, einer Wasserentnahmeeinrichtung, einer einen Filterkörper aufweisenden Filtereinrichtung und einer Umwälzeinrichtung zur Zirkulation des Salzwassers.*

Salzwasser bedeckt den überwiegenden Teil der Erdoberfläche. Trotzdem ist es nicht überall in der gewünschten Qualität verfügbar. Salzwasser bietet eine Vielzahl interessanter Anwendungsmöglichkeiten vom privaten Swimmingpool, Schwimmteich Salzwasserbiotop, über therapeutische und kosmetische Anwendungen bis zur gewerblichen Meerestierzucht. Für die menschliche Haut ist Salzwasser, durch das hohe osmotische Potential, ein wirkungsvolles Agens. Hautirritationen, Hautprobleme, Schuppenflechte und ähnliche Hautkrankheiten können gelindert werden. Voraussetzung dafür ist jedoch eine hohe Wasserqualität, da organische Verunreinigungen zu neuerlichen Hautreizungen führen können. Besonders nachteilig wirkt sich mit Chlor desinfiziertes Wasser aus, da hier Chloramine, Chloroform und andere Chlorkohlenwasserstoffe entstehen, welche bevorzugt in die Haut eindringen. Die Mehrzahl der humanpathogenen Bakterien treten im Salzwasser nicht auf, bzw. haben eine verkürzte Lebensdauer. Für Swimmingpools und Schwimmteiche besteht mit Salzwasser auch bei Temperaturen über 20 °C keine Gefahr des Auftretens von Erregern der Legionärskrankheit. Die Errichtung von größeren Salzteichen für die Zucht von Meerestieren erfordert große Mengen an Salzwasser. Dieses wird derzeit üblicher Weise in regelmäßigen Abständen gewechselt, um unerwünschte Verunreinigungen zu entfernen. Dabei wird neues Salz benötigt und gleichzeitig erfolgt eine Belastung des Abwassers. Die Lagerung von Salzwasser in Tanks oder Becken als Löschwasser, Kühlwasser, Ballastwasser in Schiffen erfolgt oft mit Zusatz von Konservierungsmitteln. Klassische Kläranlagen sind weiters nicht in der Lage, Salzwasser aufzubereiten.

Die EP 0 328 474 A1 offenbart ein Verfahren und eine Vorrichtung zur Aufbereitung von Süß- oder Salzwasser, vor allem in Aquarien. Zur Filterung des Wassers werden Filterkörper mit aeroben und Filterkörper mit anaeroben Mikroorganismen eingesetzt. Der anaerobe Filterkörper ist notwendig, um die in Aquarien erforderliche Denitrifikation des Wässer durchführen zu können.

Nach dem Stand der Technik wird Salzwasser in Pools und Becken eingesetzt, um eine Konservierung des Wassers zu erreichen. Durch die Zugabe von Salz werden die biologischen Abbauvorgänge extrem verlangsamt, es kommt daher trotz hoher Gehalte an organischen Verunreinigungen zu keiner übermäßigen Sauerstoffzehrung. Somit werden anaerobe Bedingungen und Geruchsbildung vermieden. Da es im Laufe der Zeit jedoch unweigerlich zur Anreicherung organischer Verunreinigungen kommt, insbesondere wenn eine Nutzung durch Baden, Schwimmen, Tiere usw. erfolgt, ist es notwendig, nach einiger Zeit das Wasser durch frisches Salzwasser zu ersetzen. Andere Methoden zur Konservierung von Süß- und Salzwasser arbeiten mit dem Zusatz von Chemikalien, welche einen biologischen Abbau verhindern. Die wichtigsten Agentien sind Chlor, Chlordioxid und Silber-Ionen. In der DE 3932199 A wird eine Badeanlage insbesondere für therapeutische Zwecke mit einem geschlossenen Süßwasserkreislauf beschrieben. In der Kreislaufführung ist ein UV-Desinfektionsgerät vorgesehen. In der EP 1466062 A wird ein Wasserkreislauf für einen Pool mit einem geschlossenem Tank beschrieben. Die EP 1007810 A beschreibt ein Kreislaufsystem, bei dem regelmäßig Desinfektionsmittel zudosiert werden. In der JP 2004305970 A sowie in der DE 3638239 A sind Systeme zur Aufbereitung von Salzwasser für Badezwecke mittels UV-Desinfektion offenbart, die CN 1545865 A beschreibt ein vergleichbares System zur Aufbereitung von Fischzuchtwässern im industriellen Stil. In der DE 100 63 808 A wird eine Wasseraufbereitung für eine Badewanne beschrieben.

Neben der mangelnden ökologischen Ausrichtung der Konservierung treten zunehmend gesundheitliche Bedenken in den Vordergrund. Hautreizungen, Schleimhautirritationen und Allergien werden mit konserviertem Wasser in Verbindung gebracht. Die Betriebskosten, welche durch die Chemikalien und den regelmäßig erforderlichen Wassertausch entstehen sowie der Arbeitsaufwand und der Umgang von ungeschulten Betreibern mit Chemikalien verringern die Attraktivität klassischer Konservierungstechniken.

Im Bereich des Süßwassers wurde diesem Trend durch die Einführung von Schwimmteichen und Biopools, bei denen eine biologische Aufbereitung des Badewassers erfolgt, bereits Rechnung getragen. Auf Grund der geringeren Aktivität von Mikroorganismen in salzhaltigen Wässern sind die Lösungen aus dem Süßwasserbereich nicht direkt auf Salzwasser umlegbar. Teilweise offene Kreisläufe sind bei Süßwasser unproblematisch. Salzwasser erfordert hingegen ein fehlerfreies System.

Salzwasseraquarien besitzen öfters kleine anaerobe Filter, welche für den Abbau von Stickstoffverbindungen durch Denitrifikation ausgelegt sind. Dies wird auf Grund des hohen Eintrages von eiweißhaltigen Futtermitteln bei gleichzeitiger Empfindlichkeit der Fische gegenüber Ammonium in Aquarien nötig. Die JP 9192690 A sieht beispielsweise vor, die Abbaurate von Stickstoffverbindungen durch Zusatz von Nitrosomonas-Kulturen zu erhöhen. Im Gegensatz dazu ist bei der Mehrzahl der Anwendungen von Salzwasser zum Baden und Schwimmen eine Tendenz zur Verarmung an Stickstoffverbindungen zu beobachten. Hingegen kommt es zu einer Anreicherung von organischen Verunreinigungen. Der aerobe Kohlenstoffabbau steht bei diesen Anlagen im Vordergrund. Dieser erfordert, wenn er die vollständige Aufbereitung des Salzwassers zum Ziel hat, wesentlich größere Filter, weiche durch ihre Konstruktion einen aeroben Abbau sicherstellen. Die ausreichende Sauerstoffzufuhr in jedem Teil des Filterkörpers ist Voraussetzung. Wird die Anlage zur Fischzucht genutzt, so stellt der wesentlich größere aerobe Filterkörper eine Alternative zum anaeroben Aquarienfilter dar. Nitrifikation und Denitrifikation laufen hier im Biofilm ab. Ist die Biofilmoberfläche groß genug, dass der TOC vollständig abgebaut wird, so werden gleichzeitig auch die Stickstoffverbindungen entfernt. Die CN1559934 A beschreibt ein System zur Fischzucht in Salzwasser, bei dem eine biologische Aufbereitung des Salzwassers durch Algenproduktion erfolgt. Dies kann für bestimmte Zuchtvarianten nützlich sein, trifft jedoch nicht das Bedürfnis nach klarem Wasser. Algen werden als Verunreinigung des Wassers angesehen und verringern die Attraktivität eines Gewässers für die Mehrzahl der Anwendungen deutlich. Bei Anlagen, welche nutzungsbedingt keinen ausreichenden Eintrag an Stickstoffverbindungen haben, kann es sinnvoll sein, Stickstoff zu düngen, um das Wachstum der Mikroorganismen zu fördern.

Der beanspruchten Erfindung liegt die Aufgabe zu Grunde, ein Verfahren zur Aufbereitung von Salzwasser und eine zugehörige Anlage zur Verfügung zu stellen, die einen Austausch des Salzwasser im System unnötig machen, organische Verunreinigungen verlässlich entfernen und auf umweltfreundliche Weise arbeitet.

*Was das Verfahren betrifft wird die gestellte Aufgabe erfindungsgemäß dadurch gelöst, dass das Salzwasser dem Bade-oder Schwimmbecken mittels einer Entnahmeeinrichtung entnommen und zu einem vom Bade-oder Schwimmbecken getrennten Filterbehälter gefördert wird und diesen durchströmt, wobei der Filterbehälter ganz oder teilweise mit einem Filterkörpermaterial befüllt ist, welches einen aeroben Abbau sicherstellt,*
*wobei im Trägermaterial des Filterkörpers ein Biofilm aus lebenden, sessilen Mikroorganismen gebildet wird,*
*wobei das Einbringen der Mikroorganismen durch Beimpfung mit einem Wasser vergleichbarer Salzkonzentration oder Wasser aus einem in Betrieb befindlichen System erfolgt,*
*wobei der Filterkörper derart dimensioniert ist, dass in das Salzwasser eingetragene organische Substanzen vollständig oder nahezu vollständig abgebaut werden und wobei die Mikroorganismen im Filterkörper entweder durch Intervallbeschickung direkt aus der Luft mit Sauerstoff oder durch kontinuierliches Durchströmen des Salzwassers mit im Wasser gelöstem Sauerstoff versorgt werden,*
*wobei beim Abbau entstehende Phosphate anschließend in einer dem Filterbehälter nachgeordneten Vorrichtung zur Mineralisierung von Phosphaten gebunden werden.*

*Die erfindungsgemäße Anlage ist gekennzeichnet durch eine einen Filterkörper aufweisenden, vom Bade-oder Schwimmbecken getrennten Filterbehälter, eine Entnahmeeinrichtung zur Entnahme und Ableitung des Wassers aus dem Bade- oder Schwimmbecken zur Weiterförderung an den Filterbehälter, einen am Filtersubstrat des Filterkörpers zum Abbau der organischen Substanzen im Salzwasser gebildeten Biofilm aus sessilen Mikroorganismen, und durch eine dem Filterbehälter nachgeordneten Vorrichtung zur Mineralisierung von Phosphaten.*

Gemäß der Erfindung werden die organischen Substanzen bzw. Verunreinigungen, die durch die Nutzung des Salzwassers, beispielsweise beim Schwimmen, auftreten, auf eine umweltfreundliche, chemikalienfreie Weise abgebaut. Damit wird im geschlossenen Kreislauf der Anlage dem Nutzwasserbehälter immer wieder sauberes Salzwasser zugeführt, ein Austausch des Wassers erübrigt sich, die Anlage kann das ganze Jahr über in Betrieb bleiben.

Gemäß der Erfindung werden ferner die Mikroorganismen im Trägermaterial des Filterkörpers gebildet. Es sind daher keine oder nur geringe Eingriffe von außen in das System beim Betrieb erforderlich.

In diesem Zusammenhang ist es auch wesentlich, dass die Mikroorganismen im Filterkörper entweder durch Intervallbeschickung direkt aus der Luft mit Sauerstoff oder durch kontinuierliches Zuströmen des Salzwasser mit im Wasser gelösten Sauerstoff versorgt werden.

Bevorzugt sorgt eine mechanische Vorrichtung für einen Transport des Salzwassers durch den Filterkörper, wobei üblicherweise das gesamte Wasservolumen in einem Zeitraum von 24 bis 48 Stunden durch den Filterkörper transportiert wird und der Filterkörper vom Salzwasser gleichmäßig durchströmt wird.

Dabei wird neben Phosphor erfindungsgemäß auch der beim Abbau entstehende Stickstoff gebunden. Von besonderem Vorteil ist eine Ausführung, bei der Phosphate und Stickstoff durch Pflanzen gebunden werden, wobei beispielweise Salzwasser verträgliche Pflanzen, wie Unterwasserpflanzen, Tange, Algen, aber auch in Nährstoffmangellösungen gezogene Süßwasserpflanzen, vorzugsweise Schilf, eingesetzt werden können.

Die anorganischen Nährstoffe Phosphor und Stickstoff können auch durch Mineralisierung gebunden werden, welche insbesondere durch Apatith-Bildung oder mittels Eisen-III-Verbindungen durchgeführt wird.

Es kann vorteilhaft sein, die Freisetzung von Phosphaten beim Abbau durch Stickstoffdüngung zu limitierten. Die Stickstoffmengen, welche durch Denitrifikation als Luftstickstoff verloren gehen, werden durch eine kontinuierliche Zudosierung oder periodische Düngung mit Stickstoffkomponenten, wie Ammoniumsalzen, Nitraten, Harnstoff oder anderen stickstoffhaltigen Substanzen, ausgeglichen, wobei diese stets im Überschuss gehalten werden, um eine Stickstofflimitierung der Filterbiologie auszuschließen. Dies verbessert gleichzeitig durch Förderung der Mikrobiologie im Biofilm die Abbaugeschwindigkeit für gelöste organische Substanzen.

Mit dem erfindungemäßen Verfahren lässt sich besonders gut Salzwasser mit einer Salzkonzentration von 30 g/l bis 35 g/l aufbereiten. Bevorzugt ist eine Anwendung des Verfahrens bei Salzwasser, dessen Ionenzusammensetzung natürlichem Meerwasser entspricht.

Das Einbringen der Mikroorganismen kann auf einfache Weise durch Beimpfung des Systems bzw. der Anlage mit einem Wasser vergleichbarer Salzkonzentration oder mit einem Wasser aus einem bereits in Betrieb befindlichen System erfolgen.

Die erfindungsgemäße Salzwasseranlage wird vorzugsweise derart ausgelegt, dass der Nutzwasserbehälter während seiner Nutzung einen Wasseraustausch mit der Umgebung verhindert.

Die Entnahmeeinrichtung wird erfindungemäß derart ausgeführt, dass sie Niveauschwankungen aufnehmen kann, wobei eine Ausführung als Skimmer oder unter Verwendung von Überlaufrinnen besonders bevorzugt ist.

Der Filterbehälter wird günstiger Weise vom Nutzwasserbehälter getrennt angeordnet.

Die Anlage weist vorzugsweise eine Einrichtung zur Steuerung bzw. Regelung der Filterbeschickung und zur Optimierung der Sauerstoffzufuhr der Mikroorganismen im Filterkörper auf.

Die in der Anlage vorgesehene Umwälzeinrichtung kann eine Pumpe, ein Hebewerk, Rinne, Schnecken, Wasserräder und dergleichen salzbeständiger Ausführung aufweisen.

Zur mineralischen Bindung oder Fällung von Phosphaten weist die Anlage eine entsprechende Vorrichtung auf. Die Anlage ist mit einer Pflanzzone versehen, welche mit Salzwasserpflanzen beschickt ist und direkt auf dem Filtersubstrat oder auch von diesem getrennt angeordnet ist.

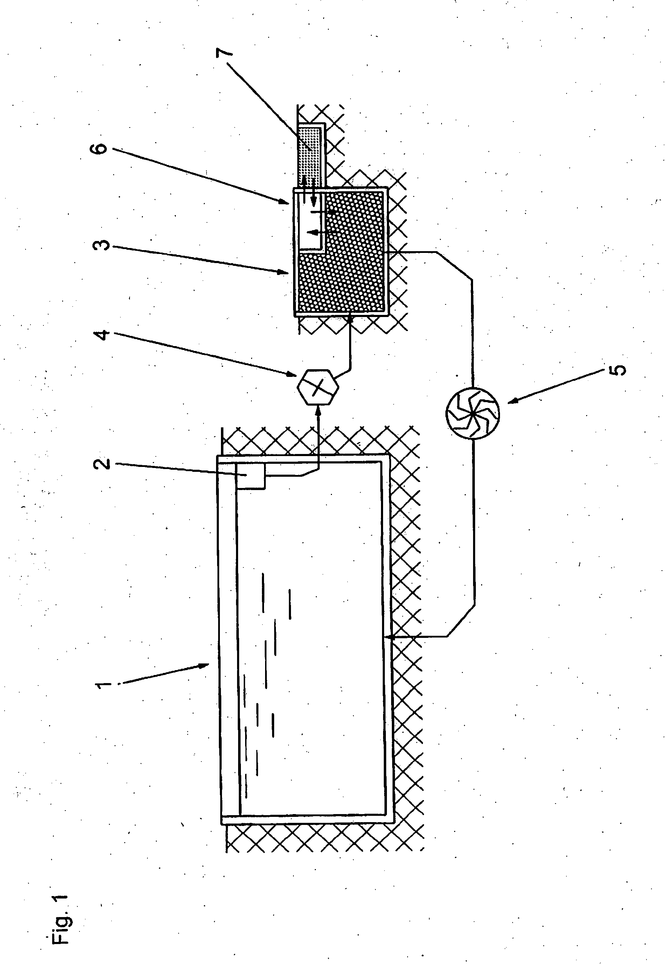

Zusätzlich kann die Anlage einen Süßwasserbehälter mit Schilf und/oder Sumpfpflanzen in einem geeigneten Substrat in phosphatfreier Nährstofflösung in unmittelbarer Nähe zum Salzwasser aufweisen. Weitere Merkmale, Vorteile und Einzelheiten der Erfindung werden anhand der Zeichnung näher beschrieben. Die einzige Zeichnungsfigur, Fig. 1, zeigt schematisch ein Ausführungsbeispiel einer erfindungsgemäßen Anlage.

Die in Fig. 1 beispielhaft gezeigte Anlage weist als Hauptbestandteile einen Nutzwasserbehälter 1, ein Entnahmeeinrichtung 2, eine Filtereinrichtung 3, eine Steuerung / Regelung 4 zur Filterbeschickung, eine mechanische Umwälzeinrichtung 5 zur Aufrechterhaltung der Zirkulation, eine Vorrichtung 6 für die Mineralisierung von Phosphaten und eine Pflanzzone 7 auf.

Da für fast alle Komponenten der Anlage unterschiedliche Bauarten und Ausführungsvarianten gewählt werden können, erfolgt eine beispielhafte Beschreibung verschiedener Möglichkeiten zur Realisierung in der Praxis. Die Beschreibung stellt jedoch keinen Anspruch auf Vollständigkeit und soll nur zur Verdeutlichung des Prinzips und von bevorzugten Varianten und Anwendungen dienen. Eine erfindungsgemäß ausgeführte Anlage muss nicht sämtliche der dargestellten und beschriebenen Komponenten aufweisen. Eine Kombination mit weiteren Komponenten zur Wasseraufbereitung, zur Wasserspeicherung, mechanischen Filterung und dergleichen ist denkbar.

Die erfindungsgemäße Anlage ist durch einen geschlossenen Wasserkreislauf gekennzeichnet. Dies bedeutet, dass das Eindringen von Fremdeinträgen weitgehend vermieden und der Verlust von Salzwasser verhindert werden. Abhängig von der Bauform und der Verwendung kommt es an der Oberfläche zu natürlichen Wasserverlusten, etwa durch Verdunstung, oder zu Einträgen, etwa durch Niederschlag. Üblicherweise halten sich diese Einflüsse im Jahresverlauf die Waage, sodass eine häufige Wiederbefüllung sowie eine Entsorgung des Salzwassers vermieden werden können. In Gebieten mit extremeren Witterungsbedingungen kann neben dem Nutzwasserbehälter ein zusätzlicher Wasserspeicher dazu dienen, saisonale Schwankungen auszugleichen.

Der geschlossene Kreislauf beinhaltet den mit Salzwasser befüllten Nutzwasserbehälter 1. Die kontrollierte Entnahme des aufzubereitenden Wasser aus dem Nutzwasserbehälter 1 erfolgt über die Entnahmeeinrichtung 2. Über die Steuerung / Regelung 4 gelangt das Salzwasser mittels Rohr- oder Schlauchverbindungen in den Filterbehälter 3. Im Filterbehälter 3 befindet sich die Vorrichtung 6 zur Mineralisierung. Die Pflanzzone 7 befindet sich entweder im Filterbehälter 3 oder ist mit diesem verbunden oder neben diesem angeordnet. Die Rückführung des Wasser im Sinne des geschlossenen Kreislaufes in den Nutzwasserbehälter 1 übernimmt eine mechanische Umwälzeinrichtung 5 zur Aufrechterhaltung der Zirkulation.

Der Nutzwasserbehälter 1 hat neben dem Nutzungszweck die Aufgabe, das benötigte Wasservolumen im Sinne eines geschlossenen Kreislaufes zu bevorraten. Dabei soll ein Fremdeintrag von außen oder ein Wasserverlust durch die Bauweise und Detailgestaltung verhindert bzw. im Bereich der umwelt- und nutzungsbezogenen Austauschvorgänge möglichst minimiert werden.

Der Nutzwasserbehälter 1 dient zur
Nutzung als Bade- und Schwimmgelegenheit, zur
Nutzung für therapeutische und kosmetische Zwecke zur Behandlung von Hautproblemen, Schuppenflechte, zur Beeinflussung der Haut durch die osmotische Wirkung des Salzwassers oder zur
Nutzung als Zierbecken, Zierteich, für Wasserspiele oder dergleichen.

Mögliche Gestaltungsformen des Nutzwasserbehälters 1 sind eine Poolform, wobei diese die bevorzugte Form ist, oder eine Teichform, die naturnahe Form mit unregelmäßiger Uferkontur oder in geometrischer Form, wie kreisrund oder oval. In gestalterischer Hinsicht sind alle Formen denkbar. So kann der Pool in konventioneller rechteckiger Form, aber auch L-förmig, mehreckig, rund oder in jeglicher Sonderform ausgeführt werden. Auch die möglichen Größen sind sehr variabel und decken die gesamte Bandbreite der Kundenanforderungen von einigen wenigen Quadratmetern, z.B. bei einer Ausführung als Tauchbecken, bis hin zu Wettbewerbsbeckengröße und darüber ab.

Bei der Teichform sind der Gestaltungsfreiraum und die Formenvielfalt auf Grund der Bauweise noch weniger Beschränkungen unterworfen. Jegliche Formen und Uferausbildungen sind möglich, sofern eine funktionsfähige Barriere gegenüber der Umgebung den Austausch von Wasser und Verunreinigungen verhindert.

Die Ausführung und Bauart entsprechen gängigen Techniken und können auf verschiedene Art und Weise unter Verwendung der gesamten Bandbreite von zur Verfügung stehenden Baumaterialien erfolgen. Bevorzugte mögliche Ausführungs- und Bauarten umfassen den Einsatz von versiegeltem, wasserundurchlässigem Beton (in Ortsbeton- oder Fertigteilbauweise), von Folienabdichtungen (über Mauerwerk, Erdmodellierungen, Holzschalungen o.ä. Untergründen), von Kunststoffen und von anderen geeignete Baumaterialen.

Bei allen verwendeten Materialien wird deren Beständigkeit gegen Salzwasserkorrosion besonders berücksichtigt, was natürlich auch für alle anderen Anlagenteile und Bauelemente gilt.

Die Entnahmeeinrichtung 2 ist für die geplante und geregelte Entnahme bzw. Ableitung des Wassers des Nutzwasserbehälters 1 zur Weiterförderung an den getrennten Filterbehälter 3, gesteuert über die dazwischen befindliche Regelung 4 zuständig.

Neben dieser Entnahmefunktion hat die Entnahmeeinrichtung 2 auch die Aufgabe, plötzliche Niveauschwankungen auszugleichen oder aufzufangen, welche aus verschiedenen Gründen entstehen können - wie z.B. durch das Volumen mehrerer Badender im Nutzwasserbehälter 1, Differenzvolumen bei Intervall-Filterbeschickung und dergleichen. Dies geschieht entweder durch die entsprechende Dimensionierung der Entnahmeeinrichtung 2 hinsichtlich des erforderlichen Zwischenspeichervolumens oder durch das Zwischenschalten eines allfälligen Ausgleichsbehälters, welcher - wenn überhaupt ausgeführt - sowohl direkt im Anschluss an die Entnahmeeinrichtung 2 angeordnet sein kann als auch nach der Regelung vor dem Filterbehälter 3 oder alternativ nach dem Filterkörper vor der Umwälzeinrichtung 5 zur Aufrechterhaltung der Zirkulation eingefügt sein kann.

Die Form und Ausführung der Entnahmeeinrichtung 2 ist stark vom Verwendungszweck des Nutzwasserbehälters 1 abhängig und kann mannigfaltig erfolgen.

Eine bevorzugte Ausführung der Entnahmeeinrichtung 2 ist als Überlaufrinne(n) entlang der Ränder oder entlang eines Teiles der Ränder des Nutzwasserbehälters 1, wobei die Ausführungsdetails nach dem Gestaltungszweck variieren. So sind Ausführungsformen als Fertigteilrinnen mit Gitterabdeckrosten aus Kunststoff, als in die Wandfertigteile eingelassene Vertiefungen mit herausfolierter Rinne, Halbschalen- und Kastenrinnen aus Kunststoff oder anderen salzwasserbeständigen Materialien mit oder ohne geschlossener oder teilweise offener Abdeckung möglich.

Eine andere bevorzugte Ausführung ist als Skimmer unterschiedlicher Bauform und Dimensionierung.

Weitere mögliche Ausführungen umfassen Klappen (als Schwebeklappen, mit mechanischer Federrückstellung oder Gegengewichten an Winkeln oder Seilzügen), Streichwehre oder andere Flachüberläufe sowie andere Auslauf-/Entnahmebauelemente, geplant für die jeweiligen Erfordernisse.

Der Filterbehälter 3 ist grundsätzlich vom Nutzwasserbehälter 1 getrennt. Die räumliche Anordnung kann direkt im Anschluss zu diesem erfolgen. Eine weitere mögliche Situierung stellt die komplett räumlich getrennte Anordnung des Filterbehälters 3 dar, wobei die Einbindung in den geschlossenen Kreislauf mit Rohren oder flexiblen Leitungen und Schläuchen erfolgen kann.

Die Ausführung kann analog zum Nutzwasserbehälter 1 in verschiedenen Materialien, Formen, Bauarten und Stilen erfolgen. Die Größe wird an die Dimensionierung des Nutzwasserbehälters 1 und den Verwendungszweck und den damit verbundenen Schmutzeintrag bzw. der erforderlichen Abbauleistung des Filters angepasst.

Der Filterbehälter 3 ist ganz oder teilweise mit einem Filterkörpermaterial befüllt, für welches unterschiedliche Stoffe zum Einsatz gelangen können. Diese sind bevorzugt Keramiken, gebrannter Ton, Tuffgestein, Hüttenbims, alternativ dazu auch klassische Filtermaterialien wie Kunststoffe, Filtersande, Kiese, Zeolithe, Steinwolle, Mineralfaser und dergleichen.

Die Steuerung / Regelung 4 zur Filterbeschickung dient dazu, den Filter bevorzugt im Intervallbetrieb, alternativ dazu auch kontinuierlich dauerbeschickt, mit dem zu reinigenden Wasser zu beaufschlagen. Die Regelung kann in verschiedenen Bauformen realisiert sein. Bestandteile der Regelung sind Dosiermischer, Absperrhähne, Drosselklappen, Schieber, jeweils mit mechanischem oder elektrischem Antrieb, welche durch ein elektronisches Regelwerk gesteuert werden. So sind die Beaufschlagungszeiten, die Frequenz derselben, die jeweils eingeleitete Menge und andere wesentliche Parameter voreinstellbar und gewährleisten eine optimale Funktion des Systems und eine maximal mögliche Abbauleistung. Die Steuerung bzw. Einstellung dieser Funktionen erfolgt entweder über Zeitschaltsequenz-Steuerung, speicherprogrammierbare Steuerung oder auch einfachere elektrische Systeme mit fix voreingestellten Parametern oder aber auch mit Rückmeldungen des Systemzustandes über entsprechende Sensoren und Sonden, wie Pegelmesser, Salzgehaltsmessung, Durchflussmessung, Gesamtumsatzvolumens-Integration und dergleichen.

Das bis in den Filterbehälter 3 geleitete Wasser muss zur Aufrechterhaltung des Kreislaufes mit mechanischer Unterstützung unter Einsatz von Energie in den Nutzwasserbehälter 1 zurückgefördert werden. Dies wird durch die Umwälzeinrichtung 5 zur Aufrechterhaltung der Zirkulation gewährleistet.

Dabei kommen bevorzugt geeignete und für die gewünschte Umwälzmenge ausgelegte Pumpen zum Einsatz. Auch hier ist auf die Salzbeständigkeit.größtes Augenmerk zu legen. Vorzugsweise kommen daher magnetgekoppelte gekapselte Pumpen in eingespritzter Plastikgehäuseausführung zum Einsatz.

Alternativ dazu können andere Einrichtungen zur Wasserrückführung verwendet werden, deren Komponenten Hebewerke, Rinnen, Schnecken oder Wasserräder sind.

Die Anordnung im Kreislauf selbst kann wie in Fig. 1 angedeutet nach dem Filterbehälter 3 und vor dem Nutzwasserbehälter 1 sein. Dies speziell dann, wenn der Filterbehälter 3 niveaugleich oder unter dem Nutzwasserbehälter 1 liegt. Ist ein räumlich abgesetzter und womöglich höher situierter Filterbehälter 3 vorgesehen kann die mechanische Zirkulationsunterstützung nach der Entnahmeeinrichtung 2 eingefügt Werden, wobei dann ein Ausgleichsbehälter, wie zuvor beschrieben, zusätzlich vor dem Steuerungs- Regelungsbauteil 4 eingefügt wird.

Direkt auf dem Filterbehälter 3 oder mit diesem verbunden sind die Vorrichtung 6 zur Mineralisierung von Phosphaten und die Pflanzzone 7.

Die Ausführung kann je nach Zweck, optischen Erfordernissen und notwendiger Dimension auf unterschiedliche Art und Weise erfolgen. So können für die Fällung von Phosphaten vorzugsweise basische Kalksubstrate oder Eisenoxide eingesetzt werden, wobei die Einbindung in den Kreislauf in Form von Behältnissen, Containern, Abteilungen oder auch in Patronenform möglich ist. Eine Mineralisierung durch Apatith-Bildung oder mittels Eisen-III-Verbindungen ist bevorzugt. Die Nährstoffe können auch durch Wachstum und anschließende Entnahme von Mikroorganismen gebunden werden.

Die Pflanzzone 7 kann zusätzlich für optische Zwecke geplant und erweitert werden. Die Anordnung ist ebenfalls direkt auf dem Substrat oder für Salzwasserpflanzen räumlich davon getrennt. Räumlich abgesetzt wird die Positionierung von Süßwasserpflanzen.

Als Salzwasserpflanzen, welche eine Bindung von Phosphaten und Stickstoff bewirken, können sowohl salzwasserverträgliche Makrophyten als auch Unterwasserpflanzen, insbesondere Seegras, Tang und Algen vorgesehen werden. Auch der Einsatz von in Nährstoffmangellösungen gezogenen, ausläuferbildenden Süßwasserpflanzen, vorzugsweise Schilf, ist von Vorteil. Schilf oder und auch andere Sumpfpflanzen werden in einem eigenem Süßwasserbehälter mit geeignetem Substrat in phosphatfreier Nährstofflösung in unmittelbarer Nähe zum Salzwasser vorgesehen und angeordnet. Die Ausläufer bzw. Rhizome dieser Pflanzen wachsen ins Salzwasserbecken oder das Filterbecken, um dort Phosphate zu entnehmen.

Somit ist der Kreislauf der Anlage geschlossen, die Verbindung der einzelnen Komponenten erfolgt, wie bereits erwähnt, durch fixe Rohrinstallationen oder mittels flexibler Schläuche.

Gemäß dem erfindungsgemäßen Verfahren ist daher ein Filterkörper mit lebenden, in einem Biofilm lokalisierten, sessilen Mikroorganismen vorgesehen. Im freien Wasser lebende Mikroorganismen sind nur zu einem geringen Prozentsatz an der Wasserreinigung beteiligt. Das Anwachsen geeigneter Biofilme erfolgt auf geeignete Materialien, welche ein gutes Verhältnis von Volumen zur Oberfläche aufweisen, sodass in einem begrenzten Filtervolumen eine maximal aktive Biofilmoberfläche ausgebildet wird. Der Biofilm ist jedoch nicht nur durch die Oberfläche des Trägermaterials bestimmt sondern insbesondere durch die Möglichkeit einer kontinuierlichen Versorgung mit organischen Verunreinigungen und Sauerstoff. Im Gegensatz zu Süßwasser, in welchem alle zum Aufbau eines Biofilms nötigen Organismen jeder Zeit im Füllwasser mitgeliefert werden bzw. aus der unmittelbaren Umgebung, beispielsweise durch Erde etc., eingeschleppt werden, erfolgt beim erfindungsgemäßen Verfahren beim Salzwasser eine Animpfung mit natürlichem Salzwasser ähnlicher Salzkonzentration aus Meeren oder Brackwasserseen bereits bestehender Anlagen. Es ist bekannt, dass Salzwässer mit Salzgehalten von 30 g/l bis 35 g/l, dies entspricht etwa natürlichem Meerwasser, abgesehen von Süßwasser, in natürlichen Systemen die höchste Abbauleistung zeigen. Hier bieten das erfindungsgemäße Verfahren und die erfindungsgemäße Anlage eine Optimierung, da Sauerstoff- und Nährstoffzufuhr gewährleistet sind. Niedrigere Salzgehalte im Bereich zwischen Süßwasser und natürlichem Meerwasser können mit geeignetem Impfwasser nach einer entsprechenden Einfahrphase mit langsamer Steigerung der organischen Belastung ebenso erfolgreich betrieben werden. Die erfindungsgemäße Anlage und das erfindungsgemäße Verfahren arbeiten auch bei Salzkonzentrationen bis 60 g/l, ebenfalls nach einer entsprechenden Einfahr- bzw. Aufbauphase, es ist jedoch eine geringere biologische Aktivität einzuplanen, was durch ein größeres Filtervolumen ausgeglichen werden kann. Die aufgenommene organische Masse wird zum Großteil direkt zu Kohlendioxid und Wasser veratmet, teilweise aber auch zum Aufbau von Biofilm genützt. Dieser wird in Zeiten geringerer Belastung ebenfalls wieder veratmet.

Bei üblichen Salzkonzentrationen im Bereich von 30 g/l bis 35 g/l wird das gesamte Wasservolumen in der Anlage in einem Zeitraum von 24 bis 48 Stunden durch den Filterkörper transportiert. Mit dem erfindungsgemäßen Verfahren lassen sich auch Salzwässer in einem Konzentrationsbereich ab 1 g/l bis zu 60 g/l gut aufbereiten. Von besonderem Vorteil ist es dabei, wenn Salzwasser, dessen Ionenzusammensetzung natürlichem Meerwasser entspricht, aufbereitet wird.

## Patentansprüche

1. Verfahren zur Aufbereitung von Salzwasser aus Bade-oder Schwimmbecken mit einem Salzgehalt von 1g/l bis 60g/l, wobei das Salzwasser in einem geschlossenen Kreislauf zirkuliert wird, welcher eine Umwälzeinrichtung aufweist, wobei
das Salzwasser dem Bade-oder Schwimmbecken mittels einer Entnahmeeinrichtung (2) entnommen und zu einem vom Bade-oder Schwimmbecken (1) getrennten Filterbehälter (3) gefördert wird und diesen durchströmt, **dadurch gekennzeichnet**
**dass** der Filterbehälter (3) ganz oder teilweise mit einem Filterkörpermaterial befüllt ist, welches einen aeroben Abbau sicherstellt, wobei im Trägermaterial des Filterkörpers ein Biofilm aus lebenden, sessilen Mikroorganismen gebildet wird,
wobei das Einbringen der Mikroorganismen durch Beimpfung mit einem Wasser vergleichbarer Salzkonzentration oder Wasser aus einem in Betrieb befindlichen System erfolgt,
wobei der Filterkörper derart dimensioniert ist, dass in das Salzwasser eingetragene organische Substanzen vollständig oder nahezu vollständig abgebaut werden,
und wobei die Mikroorganismen im Filterkörper entweder durch Intervallbeschickung direkt aus der Luft mit Sauerstoff oder durch kontinuierliches Durchströmen des Salzwassers mit im Wasser gelöstem Sauerstoff versorgt werden,
wobei beim Abbau entstehende Phosphate anschließend in einer dem Filterbehälter (3) nachgeordneten Vorrichtung (6) zur Mineralisierung von Phosphaten gebunden werden.

2. Verfahren nach Anspruch 1, **dadurch gekennzeichnet, dass** Phosphate und Stickstoff zusätzlich durch Salzwasser verträgliche Makrophyten, durch Unterwasserpflanzen, durch Tang, durch Algen oder durch in Nährstoffmangellösungen gezogene Süßwasserpflanzen, vorzugsweise Schilf, gebunden werden.

3. Verfahren nach Anspruch 1 oder 2, **dadurch gekennzeichnet, dass** beim Abbau der organischen Substanzen entstehende Phosphate und /oder Stickstoff durch Mineralisierung, insbesondere durch Apatith-Bildung oder mittels Eisen-III-Verbindungen, gebunden werden.

4. Verfahren nach einem der Ansprüche 1 bis 3, **dadurch gekennzeichnet; dass** die anorganischen Nährstoffe durch Wachstum und anschließende Entnahme der Mikroorganismen gebunden werden.

5. Verfahren nach einem der Ansprüche 1 bis 4, **dadurch gekennzeichnet, dass** die Freisetzung von Phosphaten beim Abbau durch Stickstoffdüngung limitiert wird.

6. Salzwasser-Anlage bestehend aus einem Bade-oder Schwimmbecken (1), einer Wasserentnahmeeinrichtung (2), einer Umwälzeinrichtung (5) zur Zirkulation des Salzwassers,
einen Filterkörper aufweisenden, vom Bade-oder Schwimmbecken getrennten Filterbehälter (3), und
eine Entnahmeeinrichtung (2) zur Entnahme und Ableitung des Wassers aus dem Bade- oder Schwimmbecken zur Weiterförderung an den Filterbehälter (3), **gekennzeichnet durch**
einen am Filtersubstrat des Filterkörpers zum Abbau der organischen Substanzen im Salzwasser gebildeten Biofilm aus sessilen Mikroorganismen,
und **durch** eine dem Filterbehälter (3) nachgeordneten Vorrichtung (6) zur Mineralisierung von Phosphaten.

7. Anlage nach Anspruch 6, **dadurch gekennzeichnet, dass** das Bade-oder Schwimmbecken (1) derart konzipiert ist, dass ein Wasseraustausch mit der Umgebung unter Nutzungsbedingungen verhindert ist.

8. Anlage nach einem Anspruch 6 oder 7, **dadurch gekennzeichnet, dass** sie eine Steuerung (4) zur Regelung der Filterbeschickung und dadurch zur Optimierung der Sauerstoffzufuhr der Mikroorganismen aufweist.

9. Anlage nach einem der Ansprüche 6 bis 8, **dadurch gekennzeichnet, dass** eine Pflanzzone (7) mit Salzwasserpflanzen direkt auf dem Filtersubstrat oder getrennt von diesem positioniert ist.

10. Anlage nach einem der Ansprüche 6 bis 9, **dadurch gekennzeichnet, dass** sie einen Süßwasserbehälter mit Schilf und/oder andere Sumpfpflanzen in geeignetem Substrat in phosphatfreier Nährstofflösung in unmittelbarer Nähe zum Salzwasser aufweist.

## Claims

1. Method for the treatment of salt water from bathing or swimming pools having a salt content of 1g/l to 60g/l wherein the salt water is circulated in a closed circuit which has a recirculating device wherein the salt water is removed from the bathing or swimming pool by means of an extraction device (2) and is transferred to a filter container (3) separated from the bathing or swimming pool (1) and flows through said filter container,
**characterised in that**
the filter container (3) is filled, either completely or partly, with a filter body material which provides aerobic degradation
wherein a biofilm of living sessile microorganisms is formed in the carrier material of the filter body,
wherein the microorganisms are introduced by inoculation with water of a comparable salt concentration or water from a system in operation,
wherein the filter body is dimensioned in such a way that organic substances present in the salt water are completely or nearly completely degraded,
and wherein the microorganisms in the filter body are supplied either by charging at intervals with oxygen from the air or by a continuous through flow of salt water with oxygen dissolved in the water,
wherein, as degradation is taking place, resulting phosphates are then bound in a device (6) for mineralisation of phosphates located downstream from the filter container (3).

2. Method according to claim 1, **characterised in that** phosphates and nitrogen are bound in addition by salt water-compatible macrophytes, by underwater plants, by seaweed, by algae or by fresh water plants, preferably reeds, grown in nutrient-deficient solutions.

3. Method according to claim 1 or 2, **characterised in that**, as degradation of the organic substances is taking place, resulting phosphates and/or nitrogen are bound by mineralisation, in particular by apatite formation or by means of iron(III) compounds.

4. Method according to one of the claims 1 to 3, **characterised in that** the inorganic nutrients are bound by the increase then removal of the microorganisms.

5. Method according to one of the claims 1 to 4, **characterised in that**, as degradation is taking place, the release of phosphates is limited by nitrogen fertilisation.

6. Saltwater plant consisting of a bathing or swimming bath (1), a water removal device (2), a recirculating device (5) to circulate the salt water, having a filter container (3) which has a filter body and is separated from said bathing or swimming pool, and
a removal device (2) to remove the water from the bathing or swimming pool to transfer it further to the filter container (3),
**characterised by**
a biofilm of sessile microorganisms formed on the filter substrate of the filter body to degrade the organic substances in the salt water,
and by a device (6) for the mineralisation of phosphates located downstream of the filter container (3).

7. Plant according to claim 6, **characterised in that** the bathing or swimming pool (1) is designed such that an exchange of water with the surroundings is prevented during usage conditions.

8. Plant according to a claim 6 or 7, **characterised in that** it has a control (4) to regulate the filter charging, thereby optimising the supply of oxygen to the microorganisms.

9. Plant according to one of the claims 6 to 8, **characterised in that** a plant zone (7) with salt water plants is positioned directly on the filter substrate or separated from it.

10. Plant according to one of the claims 6 to 9, **characterised in that** it has a fresh water container with reeds and/or other marsh plants in a suitable substrate in a phosphate-free nutrient solution immediately adjacent to the saltwater.

## Revendications

1. Procédé pour traiter l'eau salée provenant de bassins de baignade ou de piscines dont la salinité varie de 1 à 60g/l, selon lequel l'eau salée circule dans un circuit fermé présentant un dispositif de recirculation, selon lequel l'eau salée est prélevée dans le bassin de baignade ou la piscine au moyen d'un dispositif de prélèvement (2) et acheminée jusqu'à un récipient filtrant (3) séparé du bassin de baignade ou de la piscine (1), et s'écoule à travers celui-ci,
**caractérisé en ce que**
le récipient filtrant (3) est entièrement ou partiellement rempli d'un matériau de corps de filtre qui assure une dégradation aérobie, selon lequel un biofilm constitué de micro-organismes vivants et sessiles est formé dans le substrat du corps de filtre, selon lequel l'introduction des micro-organismes a lieu par inoculation d'une eau ayant une concentration en sel comparable ou provenant d'un système en marche, selon lequel le corps de filtre est dimensionné de telle manière que les substances organiques introduites dans l'eau salée sont entièrement ou presque entièrement dégradées, et selon lequel les micro-organismes dans le corps de filtre sont alimentés en oxygène par un apport à intervalles directement à partir de l'air, ou en oxygène dissout dans l'eau par une circulation continue de l'eau salée, selon lequel les phosphates dégagés au cours de la dégradation sont ensuite assimilés dans un dispositif (6) de minéralisation des phosphates placé en aval du récipient filtrant (3).

2. Procédé selon la revendication 1, **caractérisé en ce que** les phosphates et l'azote sont en outre assimilés par les macrophytes compatibles avec l'eau salée, les plantes subaquatiques, le varech, les algues ou les plantes d'eau douce cultivées dans des solutions pauvres en nutriments, de préférence des roseaux.

3. Procédé selon la revendication 1 ou 2, **caractérisé en ce que** les phosphates et/ou l'azote dégagés sont assimilés au cours de la dégradation des substances organiques par la minéralisation, notamment par la formation d'apatites ou au moyen des composés du fer III.

4. Procédé selon l'une quelconque des revendications 1 à 3, **caractérisé en ce que** les nutriments inorganiques sont assimilés par la croissance et le prélèvement subséquent des micro-organismes.

5. Procédé selon l'une quelconque des revendications 1 à 4, **caractérisé en ce que** la libération des phosphates au cours de la dégradation est limitée par la fertilisation azotée.

6. Installation d'eau salée comportant un bassin de baignade ou une piscine (1), un dispositif de prélèvement d'eau (2), un dispositif de recirculation (5) pour faire circuler l'eau salée, un dispositif filtrant présentant un corps de filtre, un récipient filtrant (3) séparé du bassin de baignade ou de la piscine, et un dispositif de prélèvement (2) pour prélever et évacuer l'eau du bassin de baignade ou de la piscine en vue de son réacheminement vers le récipient filtrant (3),
**caractérisé en ce**
**qu'**elle comprend un biofilm constitué de micro-organismes sessiles, formé sur le substrat du corps de filtre pour dégrader les substances organiques dans l'eau salée, et un dispositif (6) placé en aval du récipient filtrant (3) pour la minéralisation des phosphates.

7. Installation selon la revendication 6, **caractérisée en ce que** le bassin de baignade ou la piscine (1) est conçu(e) de telle manière qu'un échange d'eau avec l'environnement est empêché dans des conditions d'utilisation.

8. Installation selon l'une quelconque des revendications 6 ou 7, **caractérisée en ce qu'**elle présente une commande (4) pour réguler l'alimentation du filtre et optimiser ainsi l'alimentation en oxygène des micro-organismes.

9. Installation selon l'une quelconque des revendications 6 à 8, **caractérisée en ce qu'**une zone de plantation (7) comportant des plantes d'eau salée est placée directement sur le substrat de filtration ou séparée de celui-ci.

10. Installation selon l'une quelconque des revendications 6 à 9, **caractérisée en ce qu'**elle présente, à proximité immédiate de l'eau salée, un récipient d'eau douce comportant des roseaux et/ou d'autres plantes des marais placés dans le substrat approprié dans la solution nutritive exempte de phosphates.
